# EUROPÄISCHE PATENTSCHRIFT

(11) **EP 2 161 428 B1**
(45) Veröffentlichungstag und Bekanntmachung des Hinweises auf die Patenterteilung: **15.01.2014**
(21) Anmeldenummer: 09011535.3
(22) Anmeldetag: 09.09.2009
(51) Int. Cl.: F02B 29/04, F28F 9/02

(54) **Ladeluftkühler, insbesondere für Grossmotoren**
Charge-air cooler, in particular for large engines
Refroidisseur d'air de suralimentation, notamment pour grands moteurs

(30) Priorität: 09.09.2008 DE 102008046507
(43) Veröffentlichungstag der Anmeldung: 10.03.2010
(73) Patentinhaber: Behr Industry GmbH & Co. KG, 70469 Stuttgart (DE)
(72) Erfinder: Ruppel, Wolfgang, 75378 Bad Liebenzell (DE)
(74) Vertreter: BRP Renaud & Partner

(56) Entgegenhaltungen:
- WO-A1-2004/065874
- DE-A1- 3 403 001
- FR-A1- 2 906 017
- US-A1- 2002 144 806
- US-A1- 2006 219 394
- US-A1- 2006 278 377

## Beschreibung

Die Erfindung betrifft einen Ladeluftkühler, insbesondere für Großmotoren nach dem Oberbegriff des Patentanspruches 1, sowie ein zugehöriges Herstellungsverfahren.

Ladeluftkühler für Großmotoren, d. h. für Verbrennungsmotoren mit in der Regel vier bis zwanzig Zylindern sind in verschiedenen Bauweisen bekannt. Die im Verdichter komprimierte und dabei erhitzte Ladeluft wird im Ladeluftkühler zurückgekühlt, um einen besseren Füllungsgrad für die Zylinder zu erreichen. Die Kühlung erfolgt in der Regel durch ein flüssiges Kühlmittel, welches dem Kühlkreislauf des Verbrennungsmotors entnommen wird. Die Wärmeübertragung zwischen abzukühlender Ladeluft und dem Kühlmittel erfolgt durch einen Kühlblock, welcher aus vom Kühlmittel durchströmten Rohren und von der Ladeluft überströmten Rippen gebildet wird. Der Kühlblock wird in das Gehäuse des Ladeluftkühlers eingesetzt und abgedichtet. Die Ladeluft und ebenso das Kühlmittel werden über entsprechende Anschlussstutzen zu- und abgeführt.

Durch die DE 35 128 91 C2 wurde ein flüssigkeitsgekühlter Ladeluftkühler für Verbrennungsmotoren bekannt.

Großmotoren werden vielfach in Baureihen für unterschiedliche Leistungsstufen hergestellt, wobei gleiche Zylinder, jedoch unterschiedliche Zylinder zahlen zur Erzielung unterschiedlicher Leistungsstufen verwendet werden. Die Ladeluftkühler müssen an die unterschiedlichen Leistungsstufen angepasst werden, da die jeweils benötigte Verbrennungslust von der Zylinderzahl der Motoren abhängig ist. Bei dieser Anpassung sind verschiedene Parameter wie der ladeluftseitige Druckabfall bei der Abkühlung, die Differenz zwischen der Ladelufteintrittstemperatur und der geforderten Ladeluftaustrittstemperatur sowie die zur Verfügung stehende Kühlmitteleintrittstemperatur konstant zu halten. Darüber hinaus ist es üblich, dass dem Kühlblock zu Grunde liegende Kühlsystem, d. h. Anordnung, Ausbildung und Dimensionierung der Rohre und Rippen nicht zu verändern. Damit bleibt im Wesentlichen der Durchtrittsquerschnitt für den Ladeluftstrom, d. h. die Länge und die Breite des Ladeluftkühlers für eine Anpassung übrig. Bekannte Ladeluftkühler sind oberhalb der Kurbelwelle des Motors und vor dessen Zylindern angeordnet. Die Breite des Ladeluftkühlers wird in Richtung der Kurbelwelle, die Länge des Ladeluftkühlers wird horizontal und quer zur Kurbelwelle gemessen. Die Tiefe des Ladeluftkühlers wird in senkrechter Richtung, d. h. in Durchströmungsrichtung der Ladeluft gemessen. Bei einer Anpassung des Ladeluftkühlers an die jeweilige Leistungsstufe des Verbrennungsmotors werden also einerseits der ladeluftseitige Strömungsquerschnitt des Kühlblockes und andererseits das den Kühlblock aufnehmende Gehäuse des Ladeluftkühlers verändert. Da die Gehäuse als Gussteile hergestellt werden, sind Änderungen der Form mit relativ hohen Kosten verbunden. Dies gilt sowohl für einteilige als auch für mehrteilige Gehäuse. Bekannt sind zweigeteilte Luftführungsgehäuse, bei welchen die Trennfuge zwischen beiden Gehäuseteilen in horizontaler Richtung verläuft, wobei am oberen und am unteren Gehäuseteil Ein- und Austrittsstutzen für die Ladeluft angeformt sind. Auch bei dieser geteilten Bauart müssen zur Anpassung an verschiedene Leistungsstufen unterschiedliche Gehäuseteile hergestellt werden.

Aus der US 200610 278 377 A1 ist ein Ladeluftkühler für Verbrennungsmotoren bekannt, umfassend ein Luftführungsgehäuse, in welchem ein Kühlblock aufgenommen ist, und zwei Luftanschlussgehäuse, wobei das Luftführungsgehäuse bezüglich eines rechtwinkligen x-y-z-Koordinatensystems in der z-Richtung des Koordinatensystems zwischen den beiden Luftanschlussgehäusen angeordnet ist, wobei das Luftführungsgehäuse in einer y-z-Ebene des Koordinatensystems geteilt ist, derart, dass es zwei äußere Gehäuseteile aufweist. Beim bekannten Ladeluftkühler sind die beiden äußeren Gehäusetelle als Halbschalen konfiguriert, die aneinander befestigt sind und so das komplette Luftführungsgehäuse bilden.

Aus der DE 34 03 001 A1 ist ein weitere Ladeluftkühler bekannt, bei dem eine den Kühlerblock aufnehmende, von der Ladeluft durchströmbare Kammer seitlich von zwei Seitenwänden begrenzt ist.

Es ist Aufgabe der vorliegenden Erfindung, einen Ladeluftkühler der eingangs genannten Art derart zu gestalten, dass eine Anpassung an verschiedene Leistungsstufen des zugehörigen Verbrennungsmotors kostengünstig herstellbar ist.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist vorgesehen, dass das Luftführungsgehäuse in einer vertikalen Ebene in zwei äußere Gehäuseteile geteilt ist und dass zwischen den beiden äußeren Gehäuseteilen ein mittleres Gehäuseteil unterschiedlicher Abmessung einsetzbar ist. Damit wird der Vorteil erreicht, dass einerseits eine Anpassung des ladeluftseitigen Strömungsquerschnittes möglich ist, indem dessen Länge oder Breite vergrößert werden kann. Andererseits ist es fertigungstechnisch von Vorteil, dass jeweils gleiche äußere Gehäuseteile verwendet werden können und nur das mittlere Gehäuseteil variabel gestaltet, d. h. jeweils an die veränderten Abmessungen des Kühlblockes angepasst wird. Damit können Fertigungskosten gespart werden, da nicht das gesamte Gehäuse geändert werden muss.

Unter einem Kühlmittelanschlussflansch werden insbesondere Flanschflächen des Luftführungsgehäuses verstanden, an denen der Rohrboden des Kühlerblocks, der Kühlmittelkasten und/oder der Flanschring befestigt sind.

Nach einer vorteilhaften Weiterbildung ist das Luftführungsgehäuse in einer y-z-Ebene geteilt, d. h. in einer Ebene, welche senkrecht zur Achse der Kurbelwelle des Motors angeordnet ist. Damit wird der Vorteil erreicht, dass der Ladeluftkühler in seiner Breite veränderbar und somit an unterschiedliche Leistungsstufen des Verbrennungsmotors anpassbar ist. Für höhere Leistungsstufen wird also ein Kühlblock mit einer größeren Erstreckung in Rlchtung in der Kurbelwelle (x-Richtung) sowie ein entsprechend größeres mittleres Gehäuseteil eingesetzt, wobei wiederum die äußeren Gehäuseteile, ein vorderes Gehäuseteil und ein hinteres Gehäuseteil, die gleichen sind. In einer vorteilhaften Weiterbildung der Erfindung sind das vordere Gehäuseteil und das hintere Gehäusetell unterschiedliche ausgebildet. So kann beispielsweise eine der beiden Gehäusehälften variiert werden. Die Veränderung des Ladeluftkühlers in seiner Breite ist in der Regel (insbesondere bei V-Motoren) vorteilhafter als eine Veränderung in der Länge, da hierbei das Lichtraumprofil des V-Motors überschritten werden kann, was nicht erwünscht ist. Grundsätzlich ist die Möglichkeit der Längenänderung jedoch ebenso gegeben, d. h. eine Teilung in einer x-z-Ebene, z. B. bei einem Relhenmotor.

Nach einer bevorzugten Ausführungsform sind das Luftführungsgehäuse und das oder die Luftanschlussgehäuse bzw. die jeweiligen Gehäusehälften einteilig ausgebildet. Die vertikal verlaufende Trennfuge erstreckt sich somit bis in die Luftanschlussgehäuse. Vorteilhaft hierbei ist, dass sich weniger Gehäuseteile ergeben, die dennoch problemlos ausformbar sind.

Nach einer weiteren vorteilhaften Ausgestaltung weist das Luftführungsgehäuse mindestens einen Flansch zur Befestigung von mindestens einem Luftanschlussgehäuse auf, über welches die Ladeluft dem Luftführungsgehäuse und dem darin angeordneten Kühlblock zugeführt und anschließend wieder entnommen wird. Bevorzugt ist ein Luftanschlussgehäuse als Lufteintrittsgehäuse und ein anderes Anschlussgehäuse als Luftaustrittsgehäuse ausgebildet. Bei doppelflutiger Durchströmung des Ladeluftkühlers, insbesondere bei V-Motoren können auch jeweils zwei Lufteintritts- und zwei Luftaustrittsgehäuse vorteilhaft sein. Die Luftanschlussgehäuse sind somit separate Gehäuseteile, die einzeln hergestellt, vorzugsweise gegossen werden.

Nach einer vorteilhaften Weiterbildung weist das Luftführungsgehäuse mindestens einen Flansch zur Befestigung eines Kühlmittelanschlussgehäuses auf, welches bevorzugt als Kühlmitteleintritts- oder Kühlmittelaustrittsgehäuse ausgebildet ist. Somit sind auch die Kühlmittelanschlussgehäuse separat hergestellte Gehäuseteile. In einer vorteilhaften Weiterbildung der Erfindung ist an dem Flansch der Rohrboden befestigt.

In weiterer vorteilhafter Ausgestaltung ist der mindestens eine Flansch für das Luftanschlussgehäuse im Wesentlichen in einer horizontalen oder x-y-Ebene angeordnet. Die Ladeluft tritt somit von oben ein und nach unten aus. In einer anderen Ausgestaltung der Erfindung ist der Flansch oder sind die Flansche, insbesondere sind alle Flansche, vertikal angeordnet. In einer vorteilhaften Weiterbildung der Erfindung stellen die Schnittflächen Zylinder oder Ellipsen dar.

Nach einer vorteilhaften Weiterbildung ist der mindestens eine Flansch für das Kühlmittelanschlussgehäuse im Wesentlichen in einer vertikalen oder x-z-Ebene angeordnet. Das Kühlmittel tritt somit seitlich in den Ladeluftkühler ein und seitlich aus dem Ladeluftkühler aus.

In weiterer vorteilhafter Ausgestaltung ist der Kühlblock aus Rohren und Rippen aufgebaut, wobei die Kühlrohre vom Kühlmittel durchströmt und die Rippen von der Ladeluft überströmt werden. Damit wird eine effektive Kühlung der Ladeluft durch das Kühlmittel erreicht.

In vorteilhafter Weiterbildung weist der Kühlblock etwa vertikal oder in einer y-z-Ebene angeordnete Seitenflächen auf, welche an parallelen Flächen des Luftführungsgehäuses anliegen und auf diese Weise abgedichtet werden. Vorteilhaft hierbei ist, dass auf zusätzliche Seitenteile für die Abdichtung verzichtet werden kann. Die Flächen am Luftführungsgehäuse können aufgrund der einfachen Ausformbarkelt der äußeren Gehäuseteile hinreichend glatt, d. h. ohne spangebende Bearbeitung hergestellt werden, um eine entsprechende Abdichtung zu gewährleisten.

In weiterer vorteilhafter Ausgestaltung weist das mittlere Gehäuseteil, welches zwischen die äußeren Gehäusetelle eingesetzt wird, beiderseits Flansche auf, über welche es mit entsprechenden Flanschen der äußeren Gehäuseteile verbunden wird. Somit ist eine einfache Montage der Gehäuseteile möglich. Darüber hinaus ergibt für größere und schwerere Gehäuse der Vorteil, dass durch die Teilung kleinere und damit leichter handhabbare Gehäusetelle entstehen.

Ausführungsbeispiele der Erfindung sind in der Zeichnung dargestellt und werden im Folgenden näher beschrieben. Es zeigen
- Fig. 1: als erstes Ausführungsbeispiel der Erfindung eine Ansicht auf einen Ladeluftkühler in y-Richtung mit Teilungsebenen,
- Fig. 2: eine Ansicht auf das Gehäuse des Ladeluftkühlers in z-Richtung mit Teilungsebenen,
- Fig. 3: eine Ansicht des Gehäuses des Ladeluftkühlers mit Teilungsebenen für Anschlussgehäuse.

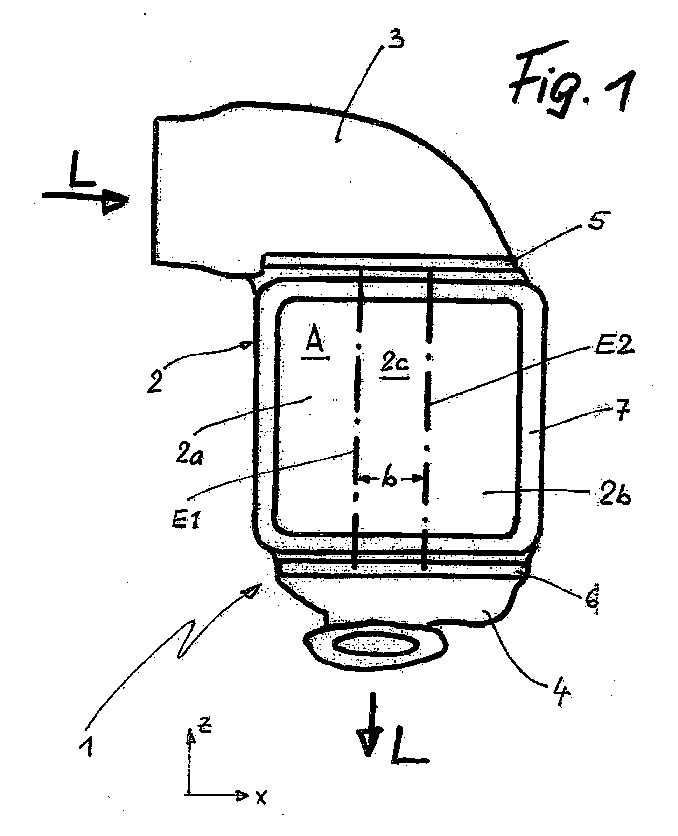

**Fig. 1** zeigt als erstes Ausführungsbeispiel der Erfindung einen Ladeluftkühler 1 in einer Ansicht In y-Richtung - die Koordinaten x und z sind in der Zeichnung dargestellt. Der Ladeluftkühler 1 umfasst ein Luftführungsgehäuse 2 sowie ein erstes Anschlussgehäuse 3 für den Eintritt von Ladeluft, dargestellt durch einen Pfeil L, sowie ein zweites Anschlussgehäuse 4 für den Austritt der Ladeluft, ebenfalls dargestellt durch einen Pfeil L. Die beiden Anschlussgehäuse 3, 4 sind separat hergestellte Bauteile, welche über Flansche 5, 6 mit dem Luftführungsgehäuse 2 verbunden werden. Letzteres weist einen Kühlmittelanschlussflansch 7 auf, an welchen ein nicht dargestelltes Kühlmittelanschlussgehäuse und/oder ein Rohrboden und/oder ein Flanschring angeflanscht werden. Der Kühlmittelanschlussflansch 7 bildet einen etwa quadratischen Querschnitt A, in welchen ein nicht dargestellter Kühlblock, der im Wesentlichen aus Rohren, Rippen und Rohrböden besteht, eingesetzt wird. Der Ladeluftkühler 1 dient der Kühlung von Verbrennungsluft, welche nach Austritt aus dem unteren Luftanschlussgehäuse 4 einem nicht dargestellten Verbrennungsmotor, d. h. dessen Zylindern zugeführt wird. Ein Kühlmittel, welches die Rohre des nicht dargestellten Kühlblocks durchströmt, wird über den Kühlmittelanschlussflansch 7 zugeführt, Wie eingangs erwähnt, soll der Ladeluftkühler 1 für verschiedene Leistungsstufen des Verbrennungsmotors verwendbar sein, wobei hier eine Anpassung an die unterschiedlichen Leistungsstufen über eine Veränderung der Breite des Kühlblockes, d. h. in x-Richtung erfolgen soll. Das Luftführungsgehäuse 2 ist daher durch zwei vertikal verlaufende Ebenen E1, E2 in zwei äußere Gehäuseteile 2a, 2b geteilt, und zwischen die beiden äußeren Gehäusetelle 2a, 2b ist ein mittleres Gehäuseteil 2c eingesetzt, welches auf hier nicht dargestellte Weise mit den beiden äußeren Gehäuseteilen 2a, 2b verbunden wird. Das mittlere Gehäuseteil 2c ist in seiner Breite b, die dem Abstand der beiden Trennfugen E1, E2 entspricht, variabel und kann somit an unterschiedliche Breiten des Kühlblocks für unterschiedliche Leistungsstufen angepasst werden. Die beiden äußeren Gehäuseteile 2a, 2b bleiben jeweils die gleichen, sie müssen nicht verändert werden; dies senkt die Fertigungskosten für die Herstellung von Ladeluftkühlem unterschiedlicher Leistungsstufen.

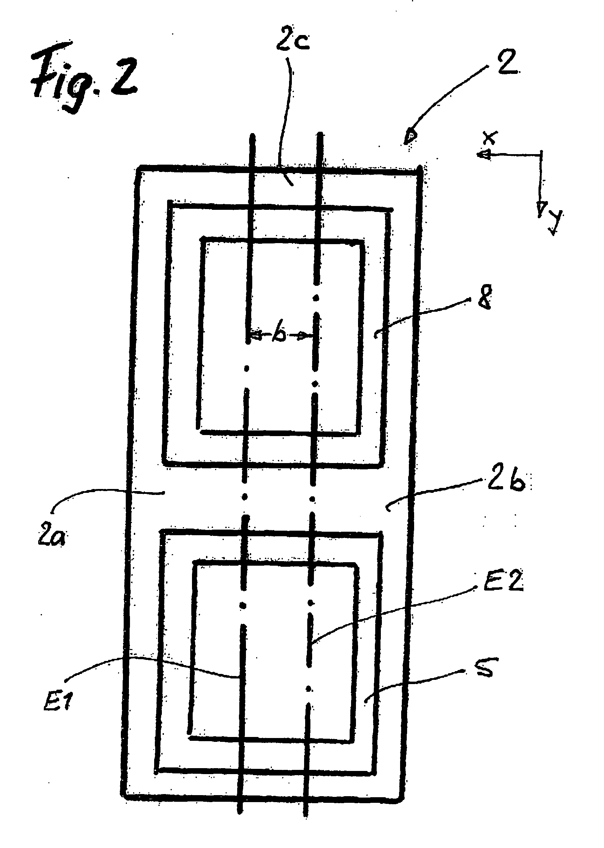

**Fig. 2** zeigt eine Ansicht in z-Richtung auf das Luftführungsgehäuse 2 ohne Luftanschlussgehäuse 3. Die Koordinaten x, y sind in der Zeichnung eingetragen. Das Luftführungsgehäuse 2 weist zwei Luftanschlussflansche 5, 8 auf, welche jeweils mit einem hier nicht dargestellten als Ladelufteintrittsgehäuse ausgebildeten Anschlussgehäuse verbunden werden. Der dargestellte Ladeluftkühler ist bevorzugt für einen V-Motor bestimmt und wird daher zweiflutig durchströmt, wobei jeweils ein gekühlter Ladeluftstrom oder Ladeluftteilstrom einer Zylinderreihe des V-Motors zugeführt wird. Die beiden Trennfugen E1, E2, welche das Luftführungsgehäuse 2 in zwei äußere Gehäuseteile 2a, 2b und einen mittleren Gehäuseteil 2c teilen, sind hier ebenfalls eingezeichnet. Durch die Einfügung des mittleren Gehäuseteiles 2c ergibt sich somit eine Vergrößerung des Ladelufteintrittsquerschnittes und des vom Luftführungsgehäuse 2 aufgenommenen Kühlblockes um die Breite b des mittleren Gehäuseteils 2c.

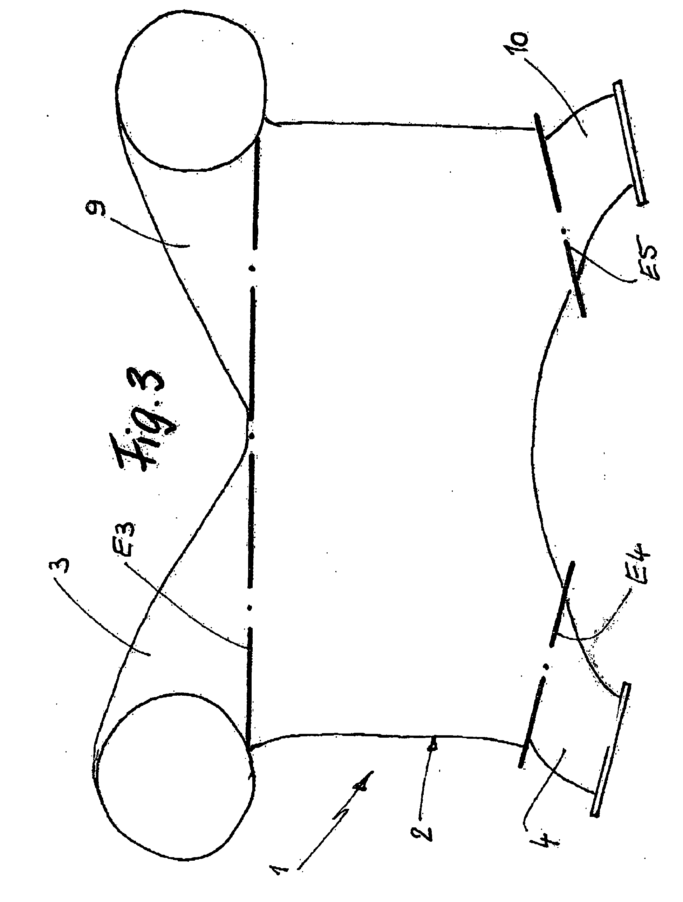

**Fig. 3** zeigt eine Ansicht des Ladeluftkühlers 1 in x-Richtung, wobei die Trennebene E3 zwischen den ladelufteintrittsseitigen Anschlussgehäusen 3, 9 und die Trennebenen E4, E5 zwischen den ladeluftaustrittsseitigen Anschlussgehäusen 4, 10 schematisch durch strichpunktierte Linien angedeutet sind. Das dargestellte Gehäuse des Ladeluftkühlers 1 besteht somit im Wesentlichen aus sieben Gehäuseteilen, nämlich dem dreiteiligen Luftführungsgehäuse 2a, 2b, 2c, den beiden Ladelufteintrittsgehäusen 3, 9 sowie den beiden Ladeluftaustrittsgehäusen 4, 10. Die beiden äußeren Gehäuseteile 2a, 2b bleiben - wie oben erwähnt - jeweils die gleichen, während sich die übrigen Gehäuseteile entsprechend der gewählten Breitenabmessung (x-Richtung) des Kühiblockes ändern.

Die Erfindung ist nicht auf die dargestellten Ausführungsbeispiele beschränkt. Beispielsweise kann die senkrechte Teilungsebene oder Trennfuge auch in einer x-z-Ebene liegen - dadurch wäre eine Veränderung der Länge des Kühlblockes, d. h. in y-Richtung möglich.

## Patentansprüche

1. Ladeluftkühler für Verbrennungsmotoren, insbesondere für Großmotoren, umfassend
- ein Luftführungsgehäuse (2), in welchem ein Kühlblock aufgenommen ist,
- wenigstens zwei Luftanschlussgehäuse (3, 4; 3, 4, 9, 10),
- wobei das Luftführungsgehäuse (2) bezüglich eines rechtwinkligen x-y-z-Koordinatensystems in der z-Richtung des Koordinatensystems zwischen den Luftanschlussgehäusen (3, 4; 3, 4, 9, 10) angeordnet ist,
- wobei das Luftführungsgehäuse (2) in wenigstens einer y-z-Ebene (E1, E2) des Koordinatensystems geteilt ist, derart, dass es zwei äußere Gehäuseteile (2a, 2b) aufweist,
**dadurch gekennzeichnet,**
**dass** In der x-Richtung des Koordinatensystems zwischen den beiden äußeren Gehäuseteilen (2a, 2b) ein mittleres Gehäuseteil (2c)eingesetzt ist, so dass das Luftführungsgehäuse (2) in der x-Richtung dreiteilig ist.

2. Ladeluftkühler nach Anspruch 1, **dadurch** gekennzeichet, **dass** das Luftführungsgehäuse (2; 12) in zwei y-z-Ebenen (E1, E2) geteilt ist, wobei das mittlere Gehäuseteil (2c) in der x-Richtung zwischen den beiden y-z-Ebenen (E1, E2) angeordnet ist.

3. Ladeluftkühler nach Anspruch 1 oder 2, **dadurch gekennzeichnet, dass** die Luftanschlussgehäuse durch zwei Ladelufteintrittsgehäuse (3, 9) und zwei Ladeiuftaustrittsgehäuse (4, 10) gebildet sind.

4. Ladeluftkühler nach einem der Ansprüche 1 bis 3, **dadurch gekennzeichnet, dass** das Luftführungsgehäuse (2) mindestens einen Flansch (5, 6, 8) zur Befestigung der Luftanschlussgehäuse (3, 4; 3, 4, 9, 10) aufweist.

5. Ladeluftkühler nach einem der Ansprüche 1 bis 4, dadurch gekenntzeichnet **dass** das Luftführungsgehäuse (2) mindestens einen Flansch (7) zur Befestigung mindestens eines Kühlmittelanschlussgehäuses und/oder eines Rohrbodens eines Kühlerblocks und/oder eines Führungsflansches für einen Rohrboden und/oder eines Kühlmittelkastens aufweist.

6. Ladeluftkühler nach Anspruch 5, **dadurch gekennzeichnet, dass** der jeweilige Kühlmittelanschlussflansch (7) bezüglich der y-Richtung des Koordinatensystems stirnseitig am Luftführungsgehäuse (2) angeordnet ist und sich in einer x-z-Ebene des Koordinatensystems erstreckt.

7. Ladeluftkühler nach Anspruch 5 oder 6, **dadurch gekennzeichnet, dass** der jeweilige Kühlmittelanschlussflansch (7) an den drei Gehäusetellen (2a, 2b, 2c) des dreiteillgen Luftführungsgehäuses (2) gemeinsam ausgebildet ist.

8. Ladeluftkühler zumindest nach Anspruch 4, **dadurch gekennzeichnet, dass** der mindestens eine Luftanschlussflansch (5, 6, 8) im Wesentlichen In einer horizontalen oder x-y-Ebene des Koordinatensystems angeordnet ist.

9. Ladeluftkühler nach einem der Ansprüche 1 bis 8, **dadurch gekennzeichnet, dass** der Kühlblock vom Kühlmittel durchströmbare Rohre und von der Ladeluft überströmbare Rippen aufweist.

10. Ladeluftkühler nach einem der Ansprüche 1 bis 9, **dadurch gekennzeichnet, dass** der Kühlblock Seitenflächen aufweist, die jeweils etwa in einer y-z Ebene des Koordinatensystems angeordnetsind und durch parallele Flächen am Luftführungsgehäuse (12) abgedichtet sind.

11. Ladeluftkühler nach einem der Ansprüche 1 bis 10, **dadurch gekennzeichnet, dass** das mittlere Gehäusetell (2c) beidseitig angeordnete Flansche aufweist, über welche es mit den äußeren Gehäuseteilen (2a, 2b) verbunden und abgedichtet ist.

12. Verfahren zum Herstellen von Ladeluftkühlern (1) für Verbrennungsmotoren, insbesondere für Großmotoren,
- wobei der jeweilige Ladeluftkühler (1) mindestens zwei Luftanschlussgehäuse (3, 4; 3, 4, 9, 10) und bezüglich eines rechtwinkligen x-y-z-Koordinatensystems in der z-Richtung des Koordinatensystems dazwischen ein Luftführungsgehäuse (2) aufweist, in welchem ein Kühlblock aufgenommen ist und das in zwei y-z-Ebenen (E1, E2) in zwei äußere Gehäuseteile (2a, 2b) geteilt ist, wobei In der x-Richtung des Koordinatensystems zwischen den äußeren Gehäusetellen (2a, 2b) ein mittleres Gehäusetell (2c) eingesetzt wird, so dass das Luftführungsgehäuse (2) in der x-Richtung dreiteilig ist,
- wobei zum Herstellen verschiedener Ladeluftkühler (1) verschiedene mittlere Gehäusetelle (2c) einsetzbar sind, die sich durch unterschiedliche Abmessungen voneinander unterscheiden.

## Claims

1. An intercooler for internal combustion engines, in particular for large engines, comprising
- an air duct housing (2), in which a cooling block is received,
- at least two air connection housings (3, 4; 3, 4, 9, 10),
- wherein the air duct housing (2) is arranged with respect to a rectangular x-y-z coordinate system in the z direction of the coordinate system between the air connection housings (3, 4; 3, 4, 9, 10),
- wherein the air duct housing (2) is divided in at least a y-z plane (E1, E2) of the coordinate system, such that it has two outer housing parts (2a, 2b),
**characterized in that**
in the x direction of the coordinate system between the two outer housing parts (2a, 2b) a central housing part (2c) is inserted, so that the air duct housing (2) has three parts in the x direction.

2. The intercooler according to Claim 1, **characterized in that** the air duct housing (2; 12) is divided in two y-z planes (E1, E2), wherein the central housing part (2c) is arranged in the x direction between the two y-z planes (E1, E2).

3. The intercooler according to Claim 1 or 2, **characterized in that** the air connection housings are formed by two charge air inlet housings (3, 9) and two charge air outlet housings (4, 10).

4. The intercooler according to one of Claims 1 to 3, **characterized in that** the air duct housing (2) has at least one flange (5, 6, 8) for fastening the air connection housings (3, 4; 3, 4, 9, 10).

5. The intercooler according to one of Claims 1 to 4, **characterized in that** the air duct housing (2) has at least one flange (7) for fastening at least one coolant connection housing and/or a tube sheet of a cooler block and/or a guide flange for a tube sheet and/or a coolant box.

6. The intercooler according to Claim 5, **characterized in that** the respective coolant connection flange (7) is arranged, with respect to the y direction of the coordinate system, on the front side on the air duct housing (2) and extends in an x-z plane of the coordinate system.

7. The intercooler according to Claim 5 or 6, **characterized in that** the respective coolant connection flange (7) is constructed jointly on the three housing parts (2a, 2b, 2c) of the three-part air duct housing (2).

8. The intercooler at least according to Claim 4, **characterized in that** the at least one air connection flange (5, 6, 8) is arranged substantially in a horizontal or x-y plane of the coordinate system.

9. The intercooler according to one of Claims 1 to 8, **characterized in that** the cooling block has tubes which are able to be flowed through by the coolant, and ribs which are above to be flowed over by the charge air.

10. The intercooler according to one of Claims 1 to 9, **characterized in that** the cooling block has lateral faces which are arranged respectively approximately in a y-z plane of the coordinate system and are sealed by parallel faces on the air duct housing (12).

11. The intercooler according to one of Claims 1 to 10, **characterized in that** the central housing part (2c) has flanges arranged on both sides, via which it is connected with the outer housing parts (2a, 2b) and sealed.

12. A method for producing intercoolers (1) for internal combustion engines, in particular for large engines,
- wherein the respective intercooler (1) has at least two air connection housings (3, 4; 3, 4, 9, 10) and, with respect to a rectangular x-y-z coordinate system, has in the z direction of the coordinate system an air duct housing (2) therebetween, in which a cooling block is received and which is divided in two y-z planes (E1, E2) into two outer housing parts (2a, 2b), wherein in the x direction of the coordinate system a central housing part (2c) is inserted between the outer housing parts (2a, 2b), so that the air duct housing (2) has three parts in the x direction,
- wherein for producing different intercoolers (1), different central housing parts (2c) are able to be inserted, which differ from one another by differing dimensions.

## Revendications

1. Refroidisseur d'air de charge pour moteurs à combustion interne, notamment pour grands moteurs, comprenant:
- un logement de guidage d'air (2), dans lequel un bloc de refroidissement est renfermé,
- au moins deux logements de raccordement d'air (3,4;3,4,9,10),
- dans lequel le logement de guidage d'air (2) est disposé par rapport à un système de coordonnées x-y-z à angle droit dans la direction z du système de coordonnées entre les logements de raccordement d'air (3, 4; 3, 4, 9, 10),
- dans lequel le logement de guidage d'air (2) est séparé dans au moins un plan y-z (E1,E2) du système de coordonnées, de telle sorte qu'il présente deux parties de logement (2a,2b) extérieures,
**caractérisé en ce que**
dans la direction x du système de coordonnées entre les deux parties de logement extérieures (2a,2b), une partie de logement centrale (2c) est insérée, de sorte que le logement de guidage d'air (2) soit divisé en trois dans la direction x.

2. Refroidisseur d'air de charge selon la revendication 1, **caractérisé en ce que** le logement de guidage d'air (2;12) est divisé en deux plans y (E1,E2), dans lequel la partie de logement centrale (2c) dans la direction x est disposée entre les deux plans y-z (E1,E2).

3. Refroidisseur d'air de charge selon les revendications 1 ou 2, **caractérisé en ce que** les logements de raccordement d'air sont formés par deux logements d'entrée d'air de charge (3,9) et deux logements de sortie d'air de charge (4,10).

4. Refroidisseur d'air de charge selon une des revendications 1 à 3, **caractérisé en ce que** le logement de guidage d'air (3) présente au moins une bride (5,6,8) pour fixer le logement de raccordement d'air (3, 4; 3, 4, 9, 10) .

5. Refroidisseur d'air de charge selon une des revendications 1 à 4, **caractérisé en ce que** le logement de guidage d'air (2) présente au moins une bride (7) pour la fixation d'au moins un logement de raccordement de liquide de refroidissement et/ou un fond tubulaire d'un bloc de refroidisseur et/ou une bride de guidage pour un fond tubulaire et/ou une caisse de liquide de refroidissement.

6. Refroidisseur d'air de charge selon la revendication 5, **caractérisé en ce que** la bride de raccordement de liquide de refroidissement respective (7) par rapport à la direction y du système de coordonnées est disposée du côté avant sur le logement de guidage d'air (2) et s'étend dans un plan x-z du système de coordonnées.

7. Refroidisseur d'air de charge selon les revendications 5 ou 6, **caractérisé en ce que** la bride de raccordement de liquide de refroidissement (7) respectif est conçue en commun sur les trois parties de logement (2a,2b,2c) du logement de guidage d'air (2) en trois parties.

8. Refroidisseur d'air de charge selon au moins la revendication 4, **caractérisé en ce que** au moins une bride de raccordement d'air (5,6,8) est disposée essentiellement dans un plan horizontal ou x-y du système de coordonnées.

9. Refroidisseur d'air de charge selon une des revendications 1 à 8, **caractérisé en ce que** le bloc de refroidissement présente des tuyaux traversés par le liquide de refroidissement et des nervures par l'intermédiaire desquelles circule l'air de charge.

10. Refroidisseur d'air de charge selon une des revendications 1 à 9, **caractérisé en ce que** le bloc de refroidissement présentent des surfaces latérales, qui sont disposées approximativement respectivement dans un plan y-z du système de coordonnées et sont étanchéifiées par des surfaces parallèles sur le logement de guidage d'air (12).

11. Refroidisseur d'air de charge selon une des revendications 1 à 10, **caractérisé en ce que** la partie de logement centrale (2c) présente des brides disposées deux côtés, par l'intermédiaire desquelles elle est reliée aux parties de logement extérieures (2a,2b) et étanchéifiée.

12. Procédé de fabrication de refroidisseurs d'air de charge (1) pour moteurs à combustion interne, notamment pour gros moteurs,
- dans lequel le refroidisseur d'air de charge respectif (1) présente au moins deux logements de raccordement d'air (3,4;3,4,9,10) et par rapport à un système de coordonnées x-y-z dans la direction z du système de coordonnées un logement de guidage d'air (2) entre ceux-ci,, dans lequel un bloc de refroidissement est renfermé et qui est divisé en deux niveaux y-z (E1, E2) dans deux parties de logement extérieures (2a,2b), dans lequel dans la direction x du système de coordonnées entre les parties de logement extérieures (2a,2b) une partie de logement centrale (2c) est insérée, de sorte que le logement de guidage d'air (2) soit en trois parties dans la direction x,
- dans lequel pour fabriquer différents refroidisseurs d'air de charge (1) des parties de logement centrales (2c) différentes peuvent être insérées, qui se différencient par des dimensions différentes.
